# EUROPEAN PATENT SPECIFICATION

(11) **EP 2 014 717 B1**
(45) Date of publication and mention of the grant of the patent: **31.07.2013**
(21) Application number: 08156541.8
(22) Date of filing: 20.05.2008
(51) Int. Cl.: C08J 5/18, C08L 77/06, C08L 25/06

(54) **Stretched product of thermoplastic resin composition having good gas-barrier properties**
Gestrecktes Erzeugnis einer thermoplastischen Harzzusammensetzung mit guten Gashemmeigenschaften
Produit étiré d'une composition thermoplastique possédant de bonnes propriétés barrière contre les gaz

(30) Priority: 21.05.2007 JP 2007133744
(43) Date of publication of application: 14.01.2009
(73) Proprietor: Mitsubishi Gas Chemical Company, Inc., Tokyo 100-8324 (JP)
(72) Inventor: Sato, Kazunobu c/o Mitsubishi Gas Chemical Company, Inc, Hiratsuka-shi, Kanagawa (JP)
(74) Representative: Gille Hrabal

(56) References cited:
- JP-A- 2000 169 603
- DATABASE WPI Week 197411, Derwent Publications Ltd., London, GB; AN 1974-20061V & JP 52 029346 B (TOYOBO KK) 01 August 1977
- DATABASE WPI Week 197503, Derwent Publications Ltd., London, GB; AN 1975-04965W, XP002530261 & JP 49 048174 B (TOYO SPINNING CO) 19 December 1974

## Description

### BACKGROUND OF THE INVENTION

### 1. Field of the Invention

The present invention relates to a stretched product having good gas-barrier properties and transparency which is made of a polystyrene-based resin composition, in particular, made of a resin composition of a polystyrene-based resin blended with a particular polyamide.

### 2. Description of the Prior Art

Polystyrene-based resins are excellent in moldability, rigidity and transparency, and widely used as the material mainly for food containers. However, the polystyrene-based resin is poor in the gas-barrier properties, and therefore, less suitable for the preservation of products susceptible to oxygen and the material for containers of foods and medicines which should be stored without change in quality even under severe conditions such as high temperature conditions. To solve this problem, it has been proposed to increase the gas-barrier properties by laminating a gas-barrier resin layer on a styrene resin layer (JP 5-293933A). Although the gas-barrier properties is improved by the lamination of the gas-barrier resin layer, the proposed method requires an interposed adhesive resin layer to firmly bond the gas-barrier resin layer to the styrene resin layer. This in turn requires a complicated lamination machine. In addition, a resin composition of a polystyrene-based resin blended with polyamide and a graft copolymer is proposed (JP 2-219843A). However, when the proposed resin composition is extruded into sheet or film, the polyamide is dispersed in the form of granules, to reduce the physical barrier effect of polyamide. Therefore, the improvement in the gas-barrier properties is insufficient.

JP 2000 169603 A relates to a drawn polyamide film obtained by melt-blending (A) 70-99 wt.% of a polyamide obtained from a diamine component containing at least 70 mol.% of m-xylylenediamine and a dicarboxylic acid component containing at least 70 mol.% of adipic acid with (B) 30-1 wt.% of a styrene-butadiene copolymer in which a butadiene structural part is hydrogenated, extruding and drawing to MD and TD directions.

By stretching a sheet composed of a resin composition of a polystyrene-based resin and a gas-barrier resin, the gas-barrier resin is made flat and dispersed in layers. However, the gas-barrier resin such as polyamide is generally crystallizable, and is crystallized and solidified by the pre-heating during the stretching operation. Therefore, the stretching is very difficult. In addition, a mixture of a polystyrene-based resin and a gas-barrier resin is made cloud because of a large difference in their refractive indexes. Further, a high stretching temperature is needed because the glass transition temperature of a non-crystalline nylon is high, although the stretching and foam molding of polystyrene is performed generally at relatively low temperatures (foaming temperature of polystyrene-based resin: 120 to 140 °C).

### SUMMARY OF THE INVENTION

An object of the present invention is to solve the above problems and provide a stretched product having good gas-barrier properties and transparency which is made of a polystyrene-based resin composition.

As a result of extensive study in view of achieving the above object, the inventors have found that a stretched product of a thermoplastic resin composition having improved gas-barrier properties and transparency is obtained by using a resin composition of polystyrene blended with a m-xylylene-containing polyamide having a specific semi-crystallization time. The present invention is based on this finding.

Thus, the present invention relates to a stretched product of a thermoplastic resin composition which comprises 80 to 98% by weight of a polystyrene resin A and 2 to 20% by weight of a polyamide resin B, a semi-crystallization time of the polyamide resin B being 200 s or more at 140 °C when determined by a depolarized light intensity method, and the polyamide resin B comprising a m-xylylene-containing polyamide which is constituted of a dicarboxylic acid constitutional unit and a diamine constitutional unit 70 mol % or more of which is derived from m-xylylenediamine.

### BRIEF DESCRIPTION OF THE DRAWINGS

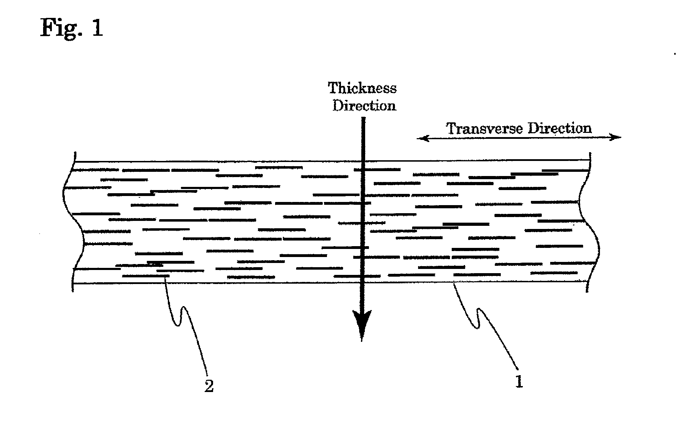

Fig. 1 is a schematic illustration of a TD cross section of a stretched product of thermoplastic resin composition of the invention, showing that the polyamide resin B is dispersed in the form of layers.

### DETAILED DESCRIPTION OF THE INVENTION

The polystyrene resin A may include a polymer of a styrene-based monomer and a copolymer of a styrene-based monomer and another monomer copolymerizable with the styrene-based monomer. Examples of the styrene-based monomer include styrene; alkylstyrenes such as 2-methylstyrene, 3-methylstyrene, 4-methylstyrene, 4-ethylstyrene, 4-t-butylstyrene and 2,4-dimethylstyrene; α-alkylstyrenes such as α-methylstyrene and α -methyl-4-methylstyrene; halostyrenes such as chlorostyrene and bromostyrene; (haloalkyl)styrenes; polyalkoxystyrenes; (polycarboxyalkyl)styrenes; (polyalkylether)styrenes; and (polyalkylsilyl)styrenes. These styrene-based monomers may be used alone or in combination of two or more.

Examples of another monomer copolymerizable with the styrene-based monomer include acrylic acid; methacrylic acid; esters of acrylic acid and methacrylic acid such as methyl acrylate, methyl methacrylate, ethyl acrylate, ethyl methacrylate, butyl acrylate, butyl methacrylate, 2-ethylhexyl acrylate and 2-ethylhexyl methacrylate; unsaturated nitriles such as acrylonitrile and methacrylonitrile; and maleic acid and its derivatives, for example, maleic anhydride, maleimide, and N-substituted maleimide such as N-methylmaleimide and N-ethylmaleimide. These monomers may be used alone or in combination of two or more.

The polystyrene resin A may be added with a high-impact polystyrene, styrene-conjugated diene block copolymer, hydrogenated styrene-conjugated diene block copolymer, ABS (rubber-grafted styrene-acrylonitrile copolymer), MBS (rubber-grafted styrene-methyl methacrylate copolymer), or rubber-grafted styrene-(meth)acrylic ester copolymer

The polyamide resin B has a semi-crystallization time of 200 s or more, preferably 250 s or more, more preferably 300 s or more when determined by a depolarized light intensity method at 140 °C. If less than 200 s, the stretching becomes difficult because polyamide is crystallized by the pre-heating in the stretching operation. The upper limit of the semi-crystallization time at 140 °C is generally infinity, preferably 1000000000 s.

The depolarized light intensity method used herein is a method of measuring the degree of crystallization of resins using an apparatus equipped with a light source, a polarizing plate and a light-receiving element, which utilizes the phenomenon of the birefringence of light passing through resins due to crystallization. When an amorphous or molten resin is crystallized, the quantity of light transmitted through the polarizing plate varies in proportion to the degree of crystallization. The semi-crystallization time is the time to be taken until the amount of the transmitted light is reduced to half under the measuring conditions, namely the time to be taken until the half of the resin is crystallized, and is used as the index of the crystallization rate.

The polyamide resin B having a semi-crystallization time within the above range preferably contains a polyamide which is produced by the polycondensation of a diamine component containing m-xylylenediamine and a dicarboxylic acid component (m-xylylene-containing polyamide). The m-xylylene-containing polyamide has a diamine constitutional unit 70 mol % or more (inclusive of 100 mol %) of which is derived from m-xylylenediamine. The dicarboxylic acid constitutional unit of the m-xylylene-containing polyamide preferably contains the units derived from a combination of isophthalic acid and an aliphatic straight chain α,ω-dicarboxylic acid having 4 to 20 carbon atoms (hereinafter simply referred to as "α,ω-dicarboxylic acid") in an amount of 70 mol % or more (inclusive of 100 mol %). When an aliphatic polyamide or a non-crystalline nylon is combinedly used as will be described below, 70 mol % or more (inclusive of 100 mol %) of the dicarboxylic acid constitutional unit of the m-xylylene-containing polyamide is preferably derived from the α,ω-dicarboxylic acid or a combination of isophthalic acid and the α,ω-dicarboxylic acid.

Examples of diamines other than m-xylylenediamine for constituting the diamine constitutional unit include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin (inclusive of structural isomers), and bis(aminomethyl)tricyclodecane (inclusive of structural isomers); and diamines having an aromatic ring such as bis(4-aminophenyl) ether, p-phenylenediamine, p-xylylenediamine, and bis(aminomethyl)naphthalene (inclusive of structural isomers). The units derived from these diamines may be contained in an amount of 30 mol % or less of the diamine constitutional unit.

Examples of the α,ω-dicarboxylic acid include aliphatic dicarboxylic acids such as succinic acid, glutaric acid, pimelic acid, suberic acid, azelaic acid, adipic acid, sebacic acid, undecanedioic acid, and dodecanedioic acid, with adipic acid being preferred.

The molar ratio of the α,ω-dicarboxylic acid and isophthalic acid, if combinedly used, is preferably 30:70 to 95:5, more preferably 30:70 to 94:6, still more preferably 40:60 to 92:8, and particularly preferably 60:40 to 90:10. If isophthalic acid is contained in the above ratio, the semi-crystallization time may be longer and the gas-barrier properties are further improved.

In addition to the α,ω-dicarboxylic acid and isophthalic acid, the dicarboxylic acid constitutional unit of the m-xylylene-containing polyamide may contain phthalic acid compounds such as terephthalic acid and orthophthalic acid; naphthalene dicarboxylic acids (inclusive of structural isomers); monocarboxylic acids such as benzoic acid, propionic acid and butyric acid; polybasic acids such as trimellitic acid and pyromellitic acid; carboxylic anhydrides such as trimellitic anhydride and pyromellitic anhydride. These dicarboxylic acids may be contained in an amount of 30 mol % or less of the total dicarboxylic acid constitutional unit.

When the m-xylylene-containing polyamide is produced by the polycondensation, the reaction system of polycondensation may contain lactams such as ε-caprolactam, ω-laurolactam and ω-enantolactam; and aminoacids such as 6-aminocaproic acid, 7-aminoheptanoic acid, 11-aminoundecanoic acid, 12-aminododecanoic acid, 9-aminononanoic acid, and p-aminomethylbenzoic acid in an amount not adversely affecting the properties of the stretched product of thermoplastic resin composition.

The m-xylylene-containing polyamide is produced by the melt polycondensation of the diamine component containing 70 mol % or more (inclusive of 100 mol %) of m-xylylenediamine and the dicarboxylic acid component preferably containing 70 mol % or more (inclusive of 100 mol %) of isophthalic acid and the α,ω-dicarboxylic acid in total. The method of polycondensation is not particularly limited and can be carried out by a known method such as atmospheric melt polymerization and pressurized melt polymerization under known conditions. For example, a nylon salt of m-xylylenediamine and adipic acid or a nylon salt of m-xylylenediamine, adipic acid and isophthalic acid is allowed to polymerize in a molten state by heating under pressure in the presence of water while removing the water added and the water generated with the progress of polycondensation. Alternatively, the polycondensation may be conducted by adding m-xylylenediamine directly into a molten adipic acid or a molten mixture of adipic acid and isophthalic acid under atmospheric pressure. In this polycondensation, to prevent the solidification of the reaction system, the polycondensation is carried out by increasing the temperature of the reaction system so as to maintain the reaction temperature above the melting points of oligoamide and polyamide being produced while continuously adding m-xylylenediamine.

The m-xylylene-containing polyamide is preferably heat-treated to increase its melt viscosity. For example, the m-xylylene-containing polyamide is gently heated for crystallization in a batch heater such as a rotary drum while preventing fuse-bonding in the presence of water in an inert gas atmosphere or under reduced pressure, and then, further heat-treated. In another method, the m-xylylene-containing polyamide is heated for crystallization in an agitated trough heater in an inert gas atmosphere, and then, further heat-treated in a hopper heater in an inert gas atmosphere. In still another method, the m-xylylene-containing polyamide is crystallized in an agitated trough heater, and then, heat-treated in a batch heater such as a rotary drum. Of the above methods, preferred is a method in which the crystallization and the heat treatment are performed in the same batch heater. The heat treatment is preferably performed by raising the temperature from 70°C to 120°C over 0.5 to 4 h to crystallize the melt-polymerized m-xylylene-containing polyamide (polyamide I) in the presence of 1 to 30 % by weight of water based on the polyamide I, and then, heat-treating the crystallized polyamide I at a temperature from M - 50°C to M - 10 °C, wherein M is the melting point of the polyamide I, for 1 to 12 h in an inert gas atmosphere or under reduced pressure.

The relative viscosity of the m-xylylone-containing polyamide is preferably 1.5 or more, more preferably 1.8 or more, and still more preferably 2.5 or more when measured on a 1 g/100 mL solution of the m-xylylene-containing polyamide in a 96% sulfuric acid at 25°C. The upper limit is preferably 4. Within the above range, the moldability is good.

The melting point of the m-xylylene-containing polyamide is preferably 160 to 235 °C, more preferably 170 to 230 °C, and still more preferably 180 to 225 °C. By bringing the melting point of the m-xylylene-containing polyamide close to that of the polystyrene resin A, the generation of odor and the discoloration due to the degradation of resins can be avoided.

The glass transition point of the m-xylylene-cantaining polyamide is preferably 75 to 120 °C, more preferably 80 to 120 °C, and still more preferably 85 to 110 °C. If being 120 °C or less, the stretch molding is easy. If being 75 °C or higher, excellent gas-barrier properties at high temperatures are achieved.

The terminal amino concentration of the m-xylylene-containing polyamide is preferably 40 µequiv/g or less and more preferably 10 to 30 µequiv/g. The terminal carboxyl concentration is preferably 40 to 100 µequiv/g. Within the above ranges, the yellowing of the stretched product is prevented.

To enhance the processing stability during the melt molding and prevent the discoloration, the m-xylylene-containing polyamide may be added with a phosphorus compound. Preferred are phosphorus compounds containing an alkali metal or an alkaline earth metal. Examples thereof include phosphates, phosphites and hypophosphites of sodium, magnesium and calcium, with hypophosphites of alkali metal or alkaline earth metal being preferably used because they are particularly excellent in the effect for preventing the yellowing of the m-xylylene-containing polyamide. The concentration of the phosphorus compound in the m-xylylene-containing polyamide is preferably 1000 ppm or less, more preferably 500 ppm or less, and still more preferably 200 ppm or less, each being based on phosphorus atom. In addition to the phosphorus compound, the m-xylylene-containing polyamide may be added with lubricant, delustering agent, heat stabilizer, weathering agent, ultraviolet absorber, nucleating agent, plasticizer, flame retardant, antistatic agent, anti-discoloration agent, anti-gelling agent, and other additives unless the addition thereof adversely affects the effects of the invention.

The m-xylylene-containing polyamide is preferably dried before use so as to limit the water content within the range of preferably 0.10% or less, more preferably 0.08% or less, and still more preferably 0.05% or less. If being 0.10% or less, the formation of air bubbles due to the water generated from the polyamide during the melt kneading is prevented. The drying may be performed by known methods, for example, but not limited to, by a method in which the m-xylylene-containing polyamide is dried under heating in a heating tumbler (rotary vacuum vessel) equipped with a vacuum pump or in a vacuum drier under reduced pressure at a temperature not higher than the melting point of the m-xylylene-containing polyamide, preferably at 160 °C or lower.

The polyamide resin B may be a mixture which is prepared, for example, by kneading the m-xylylene-containing polyamide with an aliphatic polyamide such as nylon-4, nylon-6, nylon-12, nylon-66, nylon-46, nylon-610, nylon-612, and nylon-666 or a non-crystalline nylon such as nylon-61, nylon-6T, and nylon-61T in an extruder. In this case, the polyamide resin B comprises 60 to 98% by weight of the m-xylylene-containing polyamide and 2 to 40% by weight of the aliphatic polyamide and/or the non-crystalline nylon; still more preferably 50 to 98% by weight of the m-xylylene-containing polyamide and 2 to 50% by weight of the aliphatic polyamide and/or the non-crystalline nylon; and particularly preferably 60 to 98% by weight of the m-xylylene-containing polyamide and 2 to 40% by weight of the aliphatic polyamide and/or the non-crystalline nylon. The aliphatic polyamide and the non-crystalline nylon, if combinedly used, may be blended in any ratio.

In the present invention 80 to 98% by weight of the polystyrene resin A and 2 to 20% by weight of the polyamide resin B (total: 100% by weight) are blended. If the blending ratio is outside the above ranges, the improvement of the gas-barrier properties is insufficient and the degree of foaming during the foam molding (expansion molding) is low.

In addition to the polystyrene resin A and the polyamide resin B, the thermoplastic resin composition may further contain polyolefin resin such as polyethylene and polypropylene, polycarbonate resin, acrylic resin, polyester resin, elastomer or a compatibilizer modified with carboxylic acid or its anhydride.

The thermoplastic resin composition may further contain, if needed, plasticizer, heat stabilizer, conducting agent, antistatic agent, mold release agent, anti-fogging agent, ultraviolet absorber, colorant, pigment, dispersant such as higher fatty acid, inorganic filler such as talc, or silicone.

The stretched product of the present invention is produced by the stretch molding of the thermoplastic resin composition containing the polystyrene resin A and the polyamide resin B. For example, the stretched product is produced by extruding a molten thermoplastic resin composition from an extruder, etc. through a circular die or T-die and then stretching the extruded product by a biaxial stretching machine, or produced by extruding a molten thermoplastic resin composition in the presence of a foaming agent (expanding agent) through a circular die or T-die into a foamed product.

The foaming agent includes an organic physical foaming agent, an inorganic physical foaming agent and a decomposition-type foaming agent. Examples of the organic physical foaming agent include aliphatic or alicyclic hydrocarbons such as propane, n-butane, isobutene, n-pentane, isopentane, cyclopentane, n-hexane, isohexane and cyclohexane; chlorinated hydrocarbons such as methyl chloride and ethyl chloride; and fluorinated hydrocarbons such as 1,1,1,2-tetrafluoroethane and 1,1-difluoroethane. Examples of the inorganic physical foaming agent include carbon dioxide. Examples of the decomposition-type foaming agent include azodicarbonamide. These foaming agents may be used alone or in combination of two or more. The organic physical foaming agent is preferred particularly in view of the compatibility with the polystyrene resin A and the efficiency of foaming. More preferred is n-butane, isobutene or a composition mainly composed of n-butane, isobutene or a mixture thereof. The amount of the foaming agent to be added is determined according to the kind of the foaming agent and the intended apparent density of the foamed product. A foam regulator may be added according to the desired foam size. Generally, the amount to be added is preferably 0.5 to 10% by weight, more preferably 1 to 8% by weight when the organic physical foaming agent such as a butane mixture of isobutene and n-butane is used.

The stretching temperature is preferably 120 to 140 °C. Within this range, the polystyrene resin A is sufficiently oriented. The stretch ratio (areal ratio) is preferably 5 times or more, more preferably 5 to 20 times, still more preferably 6 times (2.5 times in the machine direction and 2.5 times in the transverse direction) to 18 times, and particularly preferably 9 times (3 time in MD and 3 times in TD) to 15 times. Within the above ranges, the resultant stretched product has sufficient gas-barrier properties.

In the stretched product of thermoplastic resin composition, the flat particles of the polyamide resin B are dispersed throughout the polystyrene resin A preferably in the form of layers (Fig. 1). In Fig. 1, the dispersion state of the flat particles is schematically and simply illustrated for conciseness. Therefore, it should be noted that the shape and dimension of the flat particles, disperse density thereof, etc. are not necessarily the same as those of actual products. As seen from Fig. 1, a dispersion state in which at least one flat particle 2 of the polyamide resin B is present along the thickness direction of the stretched product 1 is achieved in the present invention. Namely, on an arbitrary TD cross section of the stretched product 1, any vertical line crossing the stretched product 1 along its thickness direction invariably intersects at least one dispersed flat particle 2. The same is also true for an arbitrary MD cross section of the stretched product 1. With such a dispersion state of the polyamide resin B, the stretched product of the invention exhibits excellent gas-barrier properties. If failing to meet the limitations of the invention, a dispersion state in which some lines crossing the stretched product along its thickness direction do not intersect the dispersed polyamide particle is obtained, or the polyamide particles do not disperse in the form of layers, instead disperse in the form of particles or granules, thereby failing to attain high gas-barrier properties.

The stretched product of thermoplastic resin composition thus produced is excellent in the gas-barrier properties and transparency and suitable as the container or film for packaging or storing foods and medicines and the foamed material for heat insulators.

The present invention will be explained in more detail by reference to the examples which should not be construed to limit the scope of the present invention. In the followings, the stretched product of thermoplastic resin composition was evaluated by the following methods.

### (1) Semi-crystallization time

Measured by a depolarized light intensity method using a polymer crystallization rate measuring apparatus "Model MK701" manufactured by Kotaki Seisakusho Co., Ltd., under the following conditions.
Sample Melting Temperature: 260 °C
Sample Melting Time: 5 min
Crystallization Bath Temperature: 140°C

### (2) Glass transition point

Measured using a heat flux differential scanning colorimeter DSC-50 manufactured by Shimadzu Corporation under the following conditions.
Reference substance: α -alumina
Sample amount: 10 mg
Heating speed: 10°C/min
Measuring temperature range: 25 to 300 °C
Atmosphere: Nitrogen gas with a flow rate of 30 ml/min

### (3) Stretchability

A film was stretched using a biaxially stretching machine ant the evaluation was made according to the following ratings.
A: film was successfully stretched.
B: film was broken during stretching.

### (4) Total light transmittance and haze

A stretched film was measured for its total light transmittance and haze according to ASTM D1003 using a color/turbidimeter COH-300A manufactured by Nippon Denshoku Industries Co., Ltd.

### (5) Oxygen gas-barrier properties

A stretched film was measured for the oxygen permeability at 23°C, an inner relative humidity of 60% and an outer relative humidity of 60% according to ASTM D3985 using a measuring device "OX-TRAN 10/50A" manufactured by Modern Controls Corp.

### (6) Dispersion

A cross section of a stretched film was dyed in reddish brown by iodine tincture. Then, the dispersion state was observed under a microscope.

### REFERENCE EXAMPLE 1

Into a jacketed 50-L reaction vessel equipped with a stirrer, a partial condenser, a cooler, a dropping tank and a nitrogen inlet, were charged 14.2 kg (97.1 mol) of adipic acid and 1.0 kg (6.2 mol) of isophthalic acid. The inner atmosphere was fully replaced with nitrogen, and the contents were made into a uniform slurry of isophthalic acid in molten adipic acid at 160 °C in a small amount of nitrogen stream. To the slurry, was added dropwise 14.0 kg (102.6 mol) of m-xylylenediamine over one hour under stirring. During the addition, the inner temperature was continuously raised to 247 °C. The water which was produced as the addition of m-xylylenediamine proceeded was removed from the reaction system through the partial condenser and the cooler. After completion of adding m-xylylenediamine, the inner temperature was raised to 260 °C and the reaction was continued for one hour. The produced polymer was taken out of the reaction vessel in the form of strand through a lower nozzle, water-cooled and then cut into pellets to obtain Polyamide 1.

The obtained pellets were charged in a stainless rotary drum heater which was then rotated at 10 rpm. After fully replacing the inner atmosphere with nitrogen, the temperature of reaction system was raised from room temperature to 150 °C in a small amount of nitrogen flow. After reaching 150 °C, the pressure of reaction system was reduced to 1 Torr, while further raising the temperature to 210 °C over 110 min. After the temperature of reaction system reached 210 °C, the reaction was allowed to further proceed at 210 °C for 180 min. Thereafter, the evacuation was stopped and the temperature was lowered under nitrogen flow. When reaching 60 °C, pellets were taken out of the heater to obtain Polyamide B1 (semi-crystallization time: 225 s; glass transition point: 90 °C).

### EXAMPLES 1 - 2

By blending polystyrene ("G9401" manufactured by PS Japan Corporation, herein after referred to as "Polystyrene A1") and Polyamide B1 in a ratio shown in Table 1, a thermoplastic resin composition was prepared. The thermoplastic resin composition was fed into a 37-mm twin screw extruder having a residence zone and melt-kneaded at a cylinder temperature of 250 °C and a screw rotation of 100 rpm. The molten strand was air-cooled for solidification and then pelletized.

The pellets obtained above were fed into a T-die twin screw extruder having a 20-mm cylinder and melt-kneaded at a cylinder temperature of 250 °C and a screw rotation of 80 rpm. The molten pellets were extruded into a form of sheet through the T-die and solidified on a cooling roll at 80 °C while taking up the sheet at a speed of 0.7 m/min, thereby obtaining a sheet having a 180 µm thickness.

The obtained sheet was cut into a 10 cm square, which was then biaxially stretched under the conditions of a pre-heating at 140 °C for 60 s, a simultaneous stretching speed of 3 m/min, and a stretch ratio of 9 times (3 times in MD and 3 times in TD), to obtain a stretched film having a 20 µm thickness. The evaluation results of the stretched film are shown in Table 1.

### REFERENCE EXAMPLE 2

A mixture of 90% by weight of poly(m-xylylene diadipamide) ("MX Nylon S6007" manufactured by Mitsubishi Gas Chemical Company, Inc. having a semi-crystallization time of 30 s and a glass transition point of 85 °C, herein after referred to as "Polyamide B2") and 10% by weight of nylon-6IT (non-crystalline nylon "Novamid X21" manufactured by Mitsubishi Engineering-Plastics Corporation having a glass transition point of 125 °C) was fed into a 37-mm twin screw extruder having a residence zone and melt-kneaded at a cylinder temperature of 300 °C and a screw rotation of 100 rpm. The molten product was extruded into a molten strand at an extrusion rate of 6 kg/h, air-cooled for solidification, and then pelletized, thereby obtaining Polyamide B3 (semi-crystallization time: 350 s; glass transition point: 89 °C).

### EXAMPLE 3

A stretched film was produced in the same manner as in Example 2 except for using Polyamide B3 in place of Polyamide B1. The results are shown in Table 1.

**Table 1**

| | Examples | | |
|---|---|---|---|
| | 1 | 2 | 3 |
| Polystyrene A1 (wt %) | 80 | 90 | 90 |
| Polyamide B1 (wt %) | 20 | 10 | - |
| Polyamide B2 (wt %) | - | - | - |
| Polyamide B3 (wt %) | - | - | 10 |
| Polyamide B4(wt %) | - | - | - |
| Nylon 6 (wt %) | - | - | - |
| Stretchability | A | A | A |
| Oxygen permeability (cc/m²·day·atm) | 150 | 700 | 800 |
| Total light transmittance (%) | 89 | 90 | 90 |
| Haze (%) | 45 | 30 | 30 |
| Dispersion | layered | layered | layered |

### REFERENCE EXAMPLE 3

A mixture of 60% by weight of Polyamide 1, 30% by weight of nylon -6IT and 10% by weight of nylon 6 ("UBE Nylon 1015B" manufactured by UBE Industries, Ltd. having a glass transition point of 48 °C) was fed into a 37-mm twin screw extruder having a residence zone and melt-kneaded at a cylinder temperature of 310 °C and a screw rotation of 100 rpm. The molten product was extruded into a molten strand at an extrusion rate of 6 kg/h, air-cooled for solidification, and then pelletized, thereby obtaining Polyamide B4 (semi-crystallization time: 1900 s; glass transition point: 92 °C).

### EXAMPLE 4

A stretched film was produced in the same manner as in Example 2 except for using a thermoplastic resin composition containing 90% by weight of Polystyrene A1 and 10% by weight of Polyamide B4 and changing the stretch ratio to 4 times (2 times in MD and 2 times in TD). The results are shown in Table 2.

### EXAMPLE 5

A stretched film was produced in the same manner as in Example 4 except for changing the stretch ratio to 6 times (2.5 times in MD and 2.5 times in TD). The results are shown in Table 2.

### EXAMPLE 6

A stretched film was produced in the same manner as in Example 4 except for changing the stretch ratio to 9 times (3 times in MD and 3 times in TD). The results are shown in Table 2.

**Table 2**

| | Examples | | |
|---|---|---|---|
| | 4 | 5 | 6 |
| Polystyrene A1 (wt %) | 90 | 90 | 90 |
| Polyamide B1 (wt %) | - | - | - |
| Polyamide B2 (wt %) | - | - | - |
| Polyamide B3 (wt %) | - | - | - |
| Polyamide B4 (wt %) | 10 | 10 | 10 |
| Nylon 6 (wt %) | - | - | - |
| Stretchability | A | A | A |
| Oxygen permeability (cc/m²·day·atm) | 2500 | 800 | 300 |
| Total light transmittance (%) | 90 | 88 | 88 |
| Haze (%) | 49 | 36 | 16 |
| Dispersion | nearly | layered | layered |
| | layered | | |

### COMPARATIVE EXAMPLE 1

The procedure of Example 1 was repeated except for using Polyamide B2 in place of Polyamide B1. Since the sheet was broken during the stretching, a stretched film was not obtained. The results are shown in Table 3.

### COMPARATIVE EXAMPLE 2

A stretched film was produced in the same manner as in Example 1 except for using only Polystyrene A1. The results are shown in Table 3.

### COMPARATIVE EXAMPLE 3

The procedure of Example 1 was repeated except for using nylon 6 in place of Polyamide B1. Since the sheet was broken during the stretching, a stretched film was not obtained. The results are shown in Table 3.

**Table 3**

| | Comparative Examples | | |
|---|---|---|---|
| | 1 | 2 | 3 |
| Polystyrene A1 (wt %) | 80 | 100 | 80 |
| Polyamide B1 (wt %) | 20 | | |
| Polyamide B2 (wt %) | - | - | - |
| Polyamide B3 (wt %) | - | - | - |
| Polyamide B4 (wt %) | - | - | - |
| Nylon 6 (wt %) | - | - | 20 |
| Stretchability | B | A | B |
| Oxygen permeability (cc/m²·day·atm) | - | 8400 | - |
| Total light transmittance (%) | - | 91 | - |
| Haze (%) | - | 0.2 | - |
| Dispersion | - | * | - |

| | | | |
|---|---|---|---|
| *No dispersed polyamide particle because its content is zero. | | | |

## Claims

1. A stretched product of a thermoplastic resin composition which comprises 80 to 98% by weight of a polystyrene resin A and 2 to 20% by weight of a polyamide resin B, a semi-crystallization time of the polyamide resin B being 200 s or more at 140°C when determined by a depolarized light intensity method, and the polyamide resin B comprising a m-xylylene-containing polyamide which is constituted of a dicarboxylic acid constitutional unit and a diamine constitutional unit 70 mol % or more of which is derived from m-xylylenediamine.

2. The stretched product according to claim 1, wherein 70 mol % or more of the dicarboxylic acid constitutional unit is derived from an aliphatic straight chain α,ω-dicarboxylic acid having 4 to 20 carbon atoms and isophthalic acid.

3. The stretched product according to claim 1, wherein a molar ratio of the aliphatic straight chain α,ω-dicarboxylic acid and isophthalic acid is 30:70 to 95:5.

4. The stretched product according to claim 1, wherein the polyamide resin B comprises 60 to 98% by weight of the m-xylylene-containing polyamide and 2 to 40% by weight of an aliphatic polyamide and/or a non-crystalline nylon.

5. The stretched product according to claim 4, wherein 70 mol % or more of the dicarboxylic acid constitutional unit of the m-xylylene-containing polyamide is derived from an aliphatic straight chain α,ω-dicarboxylic acid having 4 to 20 carbon atoms.

6. The stretched product according to claim 4, wherein 70 mol % or more of the dicarboxylic acid constitutional unit of the m-xylylene-containing polyamide is derived from an aliphatic straight chain α,ω-dicarboxylic acid having 4 to 20 carbon atoms and isophthalic acid, and a molar ratio of the aliphatic straight chain α,ω-dicarboxylic acid and isophthalic acid is 30:70 to 95:5.

7. The stretched product according to claim 1, wherein the polyamide resin B is dispersed throughout the stretched product in layers.

8. The stretched product according to claim 1, wherein a stretch ratio is 5 times or more by an areal ratio.

## Patentansprüche

1. Gestrecktes Produkt aus einer thermoplastischen Harzzusammensetzung, welche 80 bis 98 Gew,-% eines Polystyrolharzes A und 2 bis 20 Gew.-% eines Polyamidharzes B umfasst, wobei die Halbkristallisationszeit des Polyamidharzes B 200 Sekunden oder mehr bei 140°C beträgt, gemessen durch eine Methode der Intensitätsmessung von depolarlsiertem Licht, und das Polyamidharz B ein m-Xylylen-haltiges Polyamid umfasst, welches aus einer Dicarbonsdure-Aufbaueinheit und einer Dlamin-Aufbaueinheit besteht, von der 70 Mol-% oder mehr aus m-Xylylendiamin stammt.

2. Gestrecktes Produkt nach Anspruch 1, wobei 70 Mol-% oder mehr der Dicarbonsäure-Aufbaueinheit aus einer aliphatischen geradkettigen α,ω-Dlcarbonsäure mit 4 bis 20 Kohlenstoffatomen und aus Isophthalsäure stammen.

3. Gestrecktes Produkt nach Anspruch 1, wobei das molare Verhältnis der aliphatischen geradkettigen α,ω-Dicarbonsäure zu Isophthalsäure 30:70 bis 95:5 beträgt.

4. Gestrecktes Produkt nach Anspruch 1, wobei das Polyamidharz B 60 bis 98 Gew.-% des m-Xylylen-haltigen Polyamids und 2 bis 40 Gew.-% eines aliphatischen Polyamids und/oder eines nicht kristallinen Nylon umfasst.

5. Gestrecktes Produkt nach Anspruch 4, wobei 70 Mol-% oder mehr der Dicarbonsäure-Aufbaueinheit des m-Xylylen-haltigen Polyamids aus einer aliphatischen geradkettigen α,ω-Dicarbonsäure mit 4 bis 20 Kohlenstoffatomen stammen.

6. Gestrecktes Produkt nach Anspruch 4, wobei 70 Mol-% oder mehr der Dicarbonsäure-Aufbaueinheit des m-Xylylen-haltigen Polyamids aus einer aliphatischen geradkettigen α,ω-Dicarbonsäure mit 4 bis 20 Kohlenstoffatomen und aus Isophthalsäure stammen, und das molare Verhältnis der aliphatischen geradkettigen α,ω-Dicarbonsäure zu Isophthalsäure 30:70 bis 95:5 beträgt.

7. Gestrecktes Produkt nach Anspruch 1, wobei das Polyamidharz B in Schichten innerhalb des gestreckten Produkts dispergiert ist.

8. Gestrecktes Produkt nach Anspruch 1, wobei das Streckverhältnis das 5-Fache oder mehr als Flächenverhältnis beträgt.

## Revendications

1. Produit étiré d'une composition de résine thermoplastique, qui comprend 80 à 98 % en poids d'une résine de polystyrène A et 2 à 20 % en poids d'une résine de polyamide B, un temps de semi-cristallisation de la résine de polyamide B étant égal ou supérieur à 200 s à 140 °C, si déterminé par une méthode de l'intensité de la lumière dépolarisée, et la résine de polyamide B comprenant un polyamide contenant du m-xylylène, qui est constituée d'une unité constitutionnelle d'acide dicarboxylique et une unité constitutionnelle de diamine, dont 70 % en moles ou plus sont dérivés de m-xylylènediamine,

2. Produit étiré selon la revendication 1, dans lequel 70 % en moles ou plus de l'unité constitutionnelle d'acide dicarboxylique sont dérivés d'un acide α,β-dicarboxylique aliphatique à chaîne droite ayant de 4 à 20 atomes de carbone et de l'acide isophtalique.

3. Produit étiré selon la revendication 1, dans lequel le rapport molaire de l'acide α,β-dicarboxylique aliphatique à chaîne droite et de l'acide isophtalique est de 30 :70 à 95 :5.

4. Produit étiré selon la revendication 1 , dans lequel la résine de polyamide B comprend de 60 à 98 % en poids d'un polyamide contenant du m-xylylène et de 2 à 40 % en poids d'un polyamide aliphatique et/ou du nylon non cristallin.

5. Produit étiré selon la revendication 4, dans lequel 70 % en moles ou plus de l'unité constitutionnelle de l'acide dicarboxylique du polyamide contenant du m-xylylène sont dérivés d'un acide α,β-dicarboxylique aliphatique à chaîne droite ayant de 4 à 20 atomes de carbone.

6. Produit étiré selon la revendication 4, dans lequel 70 % en moles ou plus de l'unité constitutionnelle de l'acide dicarboxylique du polyamide contenant du m-xylylène sont dérivés d'un acide α,β-dicarboxylique aliphatique à chaîne droite ayant de 4 à 20 atomes de carbone et de l'acide isophtalique et le rapport molaire de l'acide α,β-dlcarboxylique aliphatique à chaîne droite et de l'acide isophtalique est de 30 :70 à 95 :5.

7. Produit étiré selon la revendication 1, dans lequel la résine de polyamide B est dispersée entre le produit étiré en couches.

8. Produit étiré selon la revendication 1, dans lequel le rapport d'étirement est 5 fois ou plus par rapport surfacique.
